# EUROPÄISCHE PATENTSCHRIFT

(11) **EP 2 669 154 B1**
(45) Veröffentlichungstag und Bekanntmachung des Hinweises auf die Patenterteilung: **24.08.2016**
(21) Anmeldenummer: 13168247.8
(22) Anmeldetag: 17.05.2013
(51) Int. Cl.: B62D 59/04

(54) **Anhänger-Rangierantrieb**
Trailer manoeuvring drive
Entraînement de rangement pour remorque

(30) Priorität: 29.05.2012 DE 102012010543
(43) Veröffentlichungstag der Anmeldung: 04.12.2013
(73) Patentinhaber: Truma Gerätetechnik GmbH & Co. KG, 85640 Putzbrunn (DE)
(72) Erfinder: Müller, Jochen, 85665 Moosach (DE); Jäger, Markus, 85635 Höhenkirchen-Siegertsbrunn (DE); Venschott, Mathias, 81825 München (DE); Schmid, Tobias, 85435 Erding (DE); Müßler, Klaus, 85235 Egenburg (DE); Fernandez, Ana Maria, 81739 München (DE); Müller, Jörg, 85658 Egmating (DE); Schaurer, Oliver, 85445 Oberding (DE); Möhring, Mario, 85408 Gammelsdorf (DE); Aemisegger, Steve, 81547 München (DE); Gumpp, Daniel, 86415 Mering (DE)
(74) Vertreter: Prinz & Partner mbB

(56) Entgegenhaltungen:
- EP-A1- 1 447 312
- EP-A1- 1 714 858

## Beschreibung

Die Erfindung betrifft einen Rangierantrieb für einen Anhänger nach dem Oberbegriff der Ansprüche 1 und 3, insbesondere für Wohnwagen, Bootsanhänger, Pferdeanhänger, Marktanhänger, Lastanhänger und ähnliches.

Anhänger werden üblicherweise von Zugmaschinen gezogen. So ist es bekannt, dass ein Pkw einen Wohnwagen ziehen kann. Wenn der Anhänger von der Zugmaschine abgenommen ist, wird er meist von Hand in die endgültige Position geschoben. Jedoch werden heutzutage zunehmend Anhänger im Wohnwagenbereich angeboten, die aufgrund ihrer Größe und damit ihres Gewichts nur noch unter Mühen von Hand verschoben werden können. Daher wurden Rangier- bzw. Hilfsantriebe entwickelt, die es ermöglichen, einen Anhänger auch ohne Zugmaschine mit Motorunterstützung zu verschieben bzw. zu drehen.

In der gattungsgemäßen EP 1 714 858 A1 wird ein Rangierantrieb für einen Fahrzeuganhänger mit einseitig gelagerter Antriebsrolle beschrieben. Der Rangierantrieb weist einen relativ zu einem Fahrgestell des Anhängers bewegbaren Träger auf, der einen Antriebsmotor und eine Antriebsrolle trägt. Ein Bewegungsmechanismus dient zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird. Die Drehachse der Antriebsrolle steht dabei in jeder Position parallel zu der Drehachse des Anhängerrads.

Ein ähnlicher Rangierantrieb ist in der EP 2 336 011 A1 gezeigt, bei dem ein die Antriebsrolle lagernder Träger auf einer gekrümmten Bahn linear geführt zwischen der Ruheposition und der Antriebsposition hin und her bewegt wird.

Aus der EP 1 447 312 A1 ist ein Rangierantrieb bekannt, bei dem die Antriebsrolle mit Hilfe eines Trägers an das Anhängerrad anstellbar ist, wobei der Träger um eine senkrechte Schwenkachse horizontal verschwenkbar ist. In der Ruheposition steht die Drehachse der Antriebsrolle schräg zu der Rad-Drehachse, während die beiden Drehachsen in der Antriebsposition parallel zueinander stehen.

Ferner ist aus der DE 601 04 626 T2 ein Hilfsantrieb für einen Anhänger bekannt, der einen Träger samt Antriebsrolle aufweist. Der Träger ist dabei teilkreisförmig verschwenkbar, sodass die Antriebsrolle an ein Rad des Anhängers geschwenkt werden kann.

Aus der EP 1 894 822 A1 ist ein Hilfsantrieb bekannt, der eine Übersetzungseinheit aufweist, sodass der Hilfsantrieb eine Motorwellendrehachse aufweist, die parallel zur Antriebsrollendrehachse ist.

Die DE 202 13 534 U1 zeigt einen Hilfsantrieb, der eine Führung zum Verstellen der Antriebsrolle aufweist.

In der EP 2 508 397 A1 ist eine Antriebsrolle für einen Rangierantrieb gezeigt. Die Antriebsrolle weist in axialer Richtung unterschiedliche Durchmesser auf, wobei die Durchmesser an den axialen Enden geringer sind als in der axialen Mitte der Antriebsrolle.

Durch die Parallelstellung der Antriebsrollen-Drehachse und der Rad-Drehachse in der Antriebsposition wird erreicht, dass die Antriebsrolle gleichmäßig gegen die Lauffläche des Antriebsrads angedrückt wird, so dass ein minimaler Schlupf bzw. eine optimale Traktion zwischen Antriebsrolle und Lauffläche erreicht werden kann. Jedoch hat sich herausgestellt, dass die Parallelstellung der Drehachsen in der Praxis oft nicht erreichbar ist, da sich die Stellung bzw. Ausrichtung der Antriebsrolle aufgrund von Toleranzen und Elastizitäten im Rangierantrieb beim Anstellen gegen die Lauffläche verändert. Wenn aber die Antriebsrolle in der Antriebsposition schräg zu dem Anhängerrad steht, entsteht ein erhöhter Schlupf, so dass die Antriebsleistung nicht optimal übertragen werden kann. Dies kann sogar zu einem Durchrutschen und damit erhöhtem Verschleiß des Reifens führen.

Die Schrägstellung der Antriebsrolle ergibt sich insbesondere aus Toleranzen in den Führungen der Motor-Getriebeeinheiten, die beim Andrücken der Antriebsrolle gegen das Anhängerrad auf Block gehen. Zudem kann sich der gesamte Aufbau, d.h. der Rangierantrieb, die Befestigung an dem Anhänger sowie auch das den Rangierantrieb tragende Anhängerchassis elastisch verformen. Üblicherweise werden derartige Rangierantriebe an einem Querträger befestigt, der an der Unterseite des Anhängerchassis angebracht ist. Schon aus Gewichtsgründen weist der Querträger eine relativ geringe Wandstärke auf, die die Steifigkeit des Querträgers begrenzt.

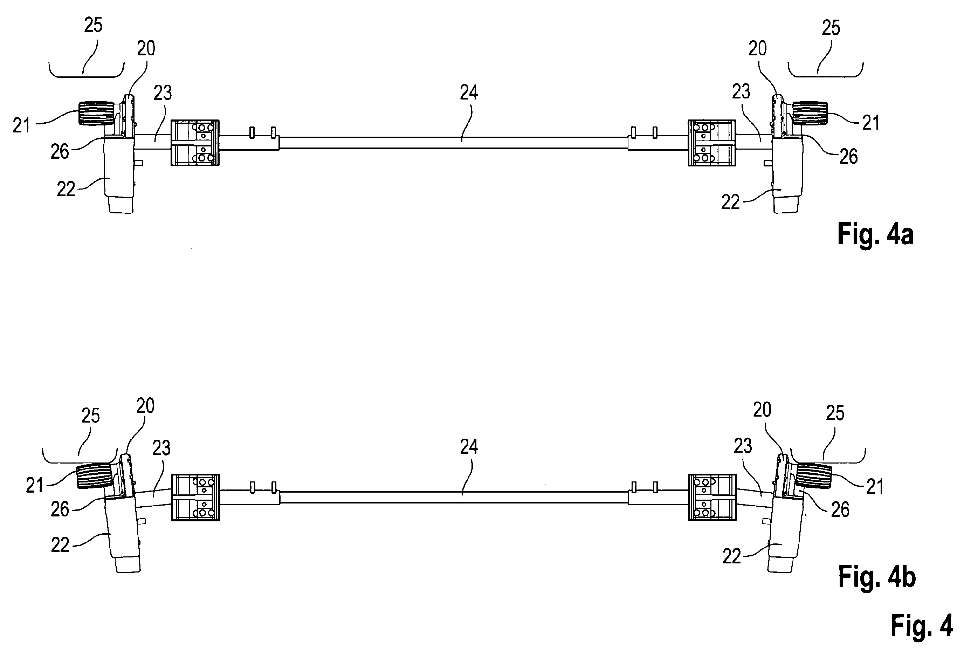

Figur 4 zeigt ein Beispiel für ein bekanntes Rangiersystem mit zwei Rangierantrieben 20 in schematischer Draufsicht, wobei die Rangierantriebe 20 in Ruheposition (Figur 4a) und in Antriebsposition (Figur 4b) dargestellt sind. Die Rangierantriebe 20 weisen jeweils eine Antriebsrolle 21 auf, die von einem unter einer Motorabdeckung vorhandenen Antriebsmotor 22 drehend angetrieben werden. Weiterhin weist jeder Rangierantrieb 20 eine Befestigungseinrichtung 23 in Form eines Profilrohrs auf, welches auf einen Querträger 24 aufgeschoben werden kann. Der Querträger 24 dient als zusätzliche Abstützung des in Figur 4 nicht gezeigten, oberhalb der Zeichenebene liegenden Chassisrahmens des Anhängers. Insbesondere soll die Torsionssteifigkeit des Chassisrahmens durch den Querträger 24 verbessert werden.

Figur 4a zeigt die Rangierantriebe 20 in der Ruheposition, in der die Antriebsrollen 21 jeweils von einem schematisch dargestellten Anhängerrad 25 getrennt sind.

Die Antriebsrolle 21 und der Antriebsmotor 22 sind von einem Träger 26 gehalten, der zwischen der in Figur 4a gezeigten Ruheposition und der in Figur 4b dargestellten Antriebsposition hin und her bewegbar ist. In der Ruheposition ist das Anhängerrad 25 frei drehbar, während in einem Betriebszustand, in dem der Träger 26 in Antriebsposition steht, das Anhängerrad 25 mit Hilfe der zugeordneten Antriebsrolle 21 drehend angetrieben werden kann.

Beim Andrücken der Antriebsrolle 21 gegen die Lauffläche des zugeordneten Anhängerrads 25 muss eine hohe Anpresskraft erreicht werden, um den Schlupf zwischen der Antriebsrolle 21 und dem Anhängerrad 25 zu minimieren. Wenn die Andrückkraft zu gering ist, besteht die Gefahr, dass die Antriebsrolle 21 durchrutscht und das Anhängerrad 25 nicht zuverlässig antreibt. Aufgrund der hohen Anpresskräfte werden die im Rangierantrieb vorhandenen Toleranzen voll ausgeschöpft. Insbesondere gehen z.B. die Lagerungen (Lagerung der Antriebsrolle 21 sowie die Bewegungsführung des Trägers 26) auf Block. Zudem können sich sämtliche Komponenten des Rangierantriebs 20, wie insbesondere die Befestigungseinrichtung 23 aufgrund der großen wirkenden Kräfte elastisch verformen. Im Ergebnis führt dies dazu, dass die Antriebsrolle 21 nicht mehr exakt parallel zu dem Anhängerrad 25 steht, sondern schräg dazu, wie in Figur 4b dargestellt.

Der Erfindung liegt die Aufgabe zugrunde, einen Rangiertrieb für einen Anhänger anzugeben, bei dem eine Parallelstellung der Antriebsrollen-Drehachse und der Rad-Drehachse in der Antriebsposition sicher gestellt werden kann.

Die Aufgabe wird durch Rangierantriebe für einen Anhänger mit den Merkmalen der nebengeordneten Ansprüche 1 und 3 gelöst. Vorteilhafte Ausgestaltungen sind in den abhängigen Ansprüchen angegeben.

Ein Rangierantrieb für einen Anhänger, mit einer Befestigungseinrichtung zum Befestigen an dem Anhänger, einem relativ zu der Befestigungseinrichtung bewegbaren Träger, einem von dem Träger gehaltenen Antriebsmotor, und mit einer von dem Antriebsmotor drehend antreibbaren und von dem Träger gehaltenen Antriebsrolle, wobei der Träger linear hin und her bewegbar ist, zwischen einer Ruheposition, in der die Antriebsrolle von einem Rad des Anhängers getrennt ist, und einer Antriebsposition, in der die Antriebsrolle gegen das Rad des Anhängers gedrückt wird, in der Ruheposition die Antriebsrollen-Drehachse der Antriebsrolle in einem Winkel ungleich 0 Grad zu der Rad-Drehachse des Rads steht, und wobei die Winkelstellung der Antriebsrollen-Drehachse beim Erreichen der Antriebsposition während des Andrückens der Antriebsrolle gegen das Rad des Anhängers aufgrund von Elastizitäten und/oder Toleranzen änderbar ist, ist dadurch gekennzeichnet, dass der in der Ruheposition vorhandene Winkel der Antriebsrollen-Drehachse derart gewählt ist, dass die Antriebsrollen-Drehachse in der Antriebsposition nach dem Vollziehen des Andrückens gegen das Rad und dem Ausgleichen der Elastizitäten und Toleranzen parallel zu der Rad-Drehachse steht, und dass der Träger wenigstens über einen Teil seines Bewegungswegs durch eine Parallelverschiebung zwischen der Ruheposition und der Antriebsposition bewegbar ist.

Die sich elastisch verformenden Komponenten sind keine Federn, vielmehr geben diese Komponenten aufgrund ihrer eigenen Elastizität ein minimales Maß nach.

In der Antriebsposition steht die Antriebsrollen-Drehachse der Antriebsrolle somit parallel zu der Rad-Drehachse des Rads.

Dabei kann die Antriebsrolle eine axiale Erstreckung aufweisen, mit einem äußeren Axialbereich, der von der Befestigungseinrichtung horizontal weiter entfernt liegt als ein innerer Axialbereich der Antriebsrolle, wobei in der Ruheposition der äußere Axialbereich der Antriebsrolle näher zu dem Rad positioniert ist als der innere Axialbereich der Antriebsrolle.

Die Antriebsrolle kann an dem Träger einseitig, also auskragend gelagert sein. Ebenso ist es aber auch möglich, dass die Antriebsrolle an dem Träger beidseitig gelagert ist.

Die Antriebsrollen-Drehachse wird demnach mit einem Winkel in der Ruheposition vorangestellt, während sie in der Antriebsposition parallel zu der Rad-Drehachse verläuft. Da der äußere Axialbereich der Antriebsrolle, also der - bezogen auf den Anhänger - an der Außenseite liegende Axialbereich näher zu dem Anhängerrad positioniert ist als der innere, dem Anhängerchassis näherliegende Axialbereich der Antriebsrolle, berührt die Antriebsrolle beim Zustellen aus der Ruheposition in die Antriebsposition zuerst mit dem äußeren Axialbereich die Lauffläche des Rads. Durch die somit zwischen der Antriebsrolle und dem Anhängerrad wirkende Kraft werden das Spiel bzw. die Toleranzen in den Lagern und Führungen im Rangierantrieb ausgeglichen und auf Block gesetzt. Hierbei ist zu beachten, dass die Antriebsrolle an dem Träger drehend gelagert ist und dass der Träger relativ zu der Befestigungseinrichtung hin und her bewegbar ist. Allein für diese Beweglichkeiten sind entsprechende Lager und Führungen vorzusehen, die naturgemäß mit Toleranzen behaftet sind. Durch das Einwirken der Kraft zwischen dem äußeren Axialbereich und dem Anhängerrad werden die Toleranzen ausgeschöpft, so dass sich die Winkelstellung der Antriebsrollen-Drehachse in der Antriebspostion gegenüber der Winkelstellung der Antriebsrollen-Drehachse in der Ruheposition verändert.

Dieser Effekt überlagert sich mit elastischen Verformungen innerhalb des Rangierantriebs, insbesondere durch die Befestigungseinrichtung zum Befestigen des Rangierantriebs an dem Träger. Aufgrund der Hebelwirkung zwischen der Krafteinleitungsstelle am äußeren Axialbereich der Antriebsrolle und der eigentlichen Befestigungsstelle des Rangierantriebs an dem Anhänger entstehen Biegemomente, die elastische Verformungen zumindest bei einem Teil der Komponenten bewirken. Auch diese elastischen Verformungen führen dazu, dass sich die Winkelstellung der Antriebsrolle bzw. der Antriebsrollen-Drehachse verändern, wenn die Antriebsrolle gegen das Rad angedrückt wird.

Die Veränderung der Winkelstellung nimmt in dem Maße zu, wie die Antriebsrolle gegen das Rad gedrückt wird. Erst dann, wenn die Antriebsrolle die eigentliche Antriebsposition (Endposition) erreicht hat, steigt die auf die Antriebsrolle wirkende Kraft nicht mehr an, so dass auch die Verformungen und damit die Änderung der Winkelstellung der Antriebsrollen-Drehachse zum Stillstand kommt. In diesem Zustand, nämlich in der Antriebsposition, soll die Antriebsrollen-Drehachse parallel zu der Rad-Drehachse stehen. Auf diese Weise ist ein optimaler Schlupf zwischen Antriebsrolle und Anhängerrad gewährleistet. Ein unerwünschtes Schrägstehen der Antriebsrolle an der Lauffläche des Anhängerrads kann vermieden werden.

Ein anderer Rangierantrieb für einen Anhänger, mit einer Befestigungseinrichtung zum Befestigen an dem Anhänger, einem relativ zu der Befestigungseinrichtung bewegbaren Träger, einem von dem Träger gehaltenen Antriebsmotor und mit einer von dem Antriebsmotor drehend antreibbaren und von dem Träger gelagerten Antriebsrolle, wobei der Träger entlang einer Bewegungsrichtung hin und her bewegbar ist, zwischen einer Ruheposition, in der die Antriebsrolle von einem Rad des Anhängers getrennt ist, und einer Antriebsposition, in der die Antriebsrolle gegen das Rad des Anhängers gedrückt wird, in der Ruheposition die Antriebsrollen-Drehachse der Antriebsrolle in einem Winkel ungleich 90 Grad zu der Bewegungsrichtung steht, in der Antriebsposition die Antriebsrollen-Drehachse der Antriebsrolle senkrecht mit einem Winkel von 90 Grad zu der Bewegungsrichtung steht, und wobei die Antriebsrolle eine axiale Erstreckung aufweist, mit einem äußeren Axialbereich, der von der Befestigungseinrichtung horizontal weiter entfernt liegt als ein innerer Axialbereich der Antriebsrolle, ist dadurch gekennzeichnet, dass in der Ruheposition der äußere Axialbereich der Antriebsrolle an einer bei bestimmungsgemäßer Montage des Rangierantriebs dem Rad zugewandten Vorderseite weiter nach vorne vorsteht als der innere Axialbereich der Antriebsrolle.

Bei dieser Variante wird die Winkelstellung der Antriebsrollen-Drehachse in der Ruheposition nicht relativ zu dem Anhängerrad, sondern relativ zu der Bewegungsrichtung definiert, entlang der Träger hin und her bewegbar ist. Als Bewegungsachse bzw. -richtung wird somit die Bewegungsrichtung des Trägers verstanden, wenn er von der Bewegungseinrichtung hin- bzw. herbewegt wird.

In der Ruheposition soll somit die Antriebsrollen-Drehachse in einem Winkel ungleich 90 Grad bzw. nicht senkrecht zu der Bewegungsrichtung stehen. In dieser Ruheposition steht aufgrund des Winkels der äußere Axialbereich der Antriebsrolle an der dem Rad zugewandten Vorderseite weiter nach vorne vor als der innere, näher zu dem Anhängerchassis liegende Axialbereich der Antriebsrolle.

Bei einer bestimmungsgemäßen Montage des Rangierantriebs wird somit erreicht, dass der äußere Axialbereich der Antriebsrolle in der Ruheposition näher zu dem Anhängerrad positioniert ist als der innere Axialbereich, so dass auch bei dieser Variante die Antriebsrolle mit einem Winkel gegen die Lauffläche des Anhängerrads gedrückt werden kann. Die im Zuge des Toleranzausgleichs und der elastischen Verformung bewirkte Änderung der Winkelstellung der Antriebsrollen-Drehachse ermöglicht es, dass schließlich in der Antriebsposition die Antriebsrollen-Drehachse senkrecht mit einem Winkel von 90 Grad zu der Bewegungsrichtung steht.

Wie dargelegt, kann sich die Winkelstellung der Antriebsrollen-Drehachse während des Andrückens der Antriebsrolle gegen das Rad des Anhängers aufgrund von Elastizitäten und/oder Toleranzen ändern, wobei der Winkel der Antriebsrollen-Drehachse zur Rad-Drehachse in der Ruheposition derart gewählt ist, dass die Antriebsrollen-Drehachse nach dem Vollziehen des Andrückens gegen das Rad und dem Ausgleichen der Elastizitäten und der Toleranzen parallel zu der Rad-Drehachse steht.

Der Träger kann wenigstens über einen Teil seines Bewegungswegs durch eine Parallelverschiebung zwischen der Ruheposition und der Antriebsposition in der Art bewegbar sein. Die Parallelverschiebung entspricht im mathematischen Sinne einer Translation. Von dieser Bewegungsdefinition ausdrücklich ausgenommen sind die oben beschriebenen Winkelveränderungen, die sich durch Elastizitäten oder Toleranzen (z.B. Lagerspiel) ergeben können.

Insbesondere kann bei einem Bewegen des Trägers aus der Ruheposition in die Antriebsposition die Winkelstellung der Antriebsrollen-Drehachse relativ zu der Rad-Drehachse solange unveränderlich sein, solange die Antriebsrolle das Rad des Anhängers noch nicht berührt, also keine Kraft zwischen der Antriebsrolle und dem Rad wirkt.

Bei einer Variante kann die Bewegung des Trägers eine Bewegungskomponente in Horizontalrichtung und/oder eine Bewegungskomponente in Vertikalrichtung aufweisen, wobei die Bewegungskomponente linear ist. Beispiele für eine derartige lineare Bewegung des Trägers sind aus der EP 1 714 858 A1 oder der EP 2 336 011 A1 bekannt. Eine Linearbewegung kann somit exakt gradlinig sein. Ebenso ist unter einer linearen Bewegung aber auch eine geführte Bewegung zu verstehen, bei der nur eine Bewegungskomponente sich im Raum linear erstreckt, wie dies bei der EP 2 336 011 A1 in Horizontalrichtung der Fall ist.

Bei beiden Varianten genügt es, wenn die Antriebsrollen-Drehachse in der Ruheposition nur minimal schräg zu den restlichen Komponenten steht, insbesondere nur minimal schräg zu der Bewegungsachse des Trägers bzw nur minimal schräg zu der Rad-Drehachse. Der Winkel der Antriebsrollen-Drehachse kann in diesem Fall z.B. nur wenige Grad, z.B. 1 bis 3 Grad von einer senkrechten Anordnung zwischen der Antriebsrollen-Drehachse und der Bewegungsachse bzw. einer parallelen Anordnung zwischen der Antriebsrollen-Drehachse und der Rad-Drehachse abweichen. Bei dieser Anordnung ergibt sich die Möglichkeit, das technisch bedingte Spiel in den Führungen auszugleichen. So wird z.B. der Träger relativ zu der Befestigungseinrichtung bzw. einer von der Befestigungseinrichtung getragenen Halterung geführt, d.h. in einer geeigneten Führung, z.B. einer Linearführung, gehalten. Zudem wird die Antriebsrolle am Träger geführt bzw. gelagert. Alle Führungen und Lager weisen geringe Toleranzen auf, die sich jedoch im Betrieb addieren können.

Insbesondere dann, wenn die Antriebsrolle mit hoher Kraft gegen das Anhängerrad angedrückt wird, werden die Führungs- und Lagertoleranzen ausgeschöpft, so dass die Antriebsrolle in ihrer Stellung um einige Grad nachgibt. Wenn die Antriebsrolle z.B. - gemäß dem Stand der Technik - im Ausgangszustand (Ruheposition) genau senkrecht zu der Bewegungsachse des Trägers steht, wird sie im Lastzustand (Antriebsposition) nicht mehr senkrecht zu der Bewegungsachse, sondern in einem etwas kleineren Winkel, z.B. 88 Grad oder 89 Grad stehen. Das führt dazu, dass die Antriebsrolle leicht schräg gegen die Lauffläche des Anhängerrads angedrückt wird, wodurch die Kraftübertragung zwischen Antriebsrolle und Anhängerrad zumindest geringfügig eingeschränkt werden kann.

Durch das "proaktive" Schrägstellen der Antriebsrollen-Drehachse im Ruhezustand kann diesem Nachteil entgegengewirkt werden. Wenn dann nämlich die Antriebsrolle beim Andrücken gegen das Anhängerrad eine Ausgleichbewegung vollzieht, weil die Führungs- und Lagertoleranzen erschöpft werden, stellt sich schließlich im Lastzustand (Antriebsposition) die Antriebsrollen-Drehachse exakt senkrecht zu der Bewegungsachse des Trägers. Dadurch kann eine gleichmäßige Kraftübertragung auf das Anhängerrad gewährleistet werden.

Bei einer Variante ist eine Bewegungseinrichtung vorgesehen, zum Bewegen des Trägers zwischen einer Ruheposition, in der die Antriebsrolle von einem Rad des Anhängers getrennt ist, und einer Antriebsposition, in der die Antriebsrolle gegen das Rad des Anhängers gedrückt wird.

Der Rangierantrieb weist typischerweise den relativ zu der Befestigungseinrichtung bzw. einer von der Befestigungseinrichtung getragenen Halterung bewegbaren Träger auf, der den Antriebsmotor und die Antriebsrolle trägt bzw. lagert. Mit Hilfe der Bewegungseinrichtung kann der Träger zwischen der Ruheposition und der Antriebsposition hin- und herbewegt werden, sodass die Antriebsrolle bei Bedarf gegen das Rad des Anhängers, insbesondere gegen die Lauffläche des Anhängerrads angedrückt oder von dem Rad abgehoben wird. Dieser Aufbau ist zum Beispiel aus der EP 1 714 858 A1 bekannt.

Im Kraftfluss zwischen dem Antriebsmotor und der Antriebsrolle kann eine Getriebeeinrichtung vorgesehen sein, wobei der äußere Axialbereich der Antriebsrolle von der Getriebeeinrichtung horizontal weiter entfernt liegt als der innere Axialbereich der Antriebsrolle. Dies bedeutet, dass sich die Antriebsrolle von der Getriebeeinrichtung horizontal wegerstreckt. Dabei kann die Getriebeeinrichtung ebenfalls von dem Träger gehalten sein.

Die Getriebeeinrichtung kann in geeigneter Weise aufgebaut sein. Insbesondere kann die Getriebeeinrichtung wenigstens eine Komponente aufweisen, ausgewählt aus der Gruppe Stirnradstufe, Kegelradstufe, Kronradstufe, Schneckenradstufe, Hypoidstufe, Doppelzahnrad, einstückig ausgeführtes Doppelzahnrad.

Je nach Winkelstellung zwischen der Drehachse des Antriebsmotors und der Drehachse der Antriebsrolle kann somit ein geeignetes Getriebe aufgebaut werden, wobei auch verschiedene Komponenten kombinierbar sind.

Bei einer Ausführungsform kann der Träger z.B. gleichzeitig einen Teil des Getriebegehäuses bilden, so dass der Träger und das Getriebegehäuse in einer Baugruppe integriert sind.

Der Winkelbereich, über den die Antriebsrollen-Drehachse bei Erreichen der Antriebsposition durch die Einwirkung der Andrückkraft gegen das Anhängerrad ihre Richtung ändert, beträgt nur wenige Grad, z.B. 1 bis 10 Grad oder 1 bis 3 Grad. In der Ruheposition kann demnach der Winkel zwischen der Antriebsrollen-Drehachse und der Rad-Drehachse zwischen 1 Grad und 10 Grad, insbesondere zwischen 1 Grad und 5 Grad, insbesondere zwischen 1 Grad und 3 Grad liegen. Die Schrägstellung der Antriebsrollen-Drehachse gegenüber der Parallelanordnung zu der Rad-Drehachse kann dementsprechend relativ gering sein. Sie hängt insbesondere von der Steifigkeit des Gesamtaufbaus sowie den Toleranzen in den Lagerungen und Führungen ab.

Der Schrägstellungswinkel kann ohne Weiteres aufgrund der vorhandenen Informationen über den konstruktiven Aufbau des Rangierantriebs und der verwendeten Materialien berechnet werden, z.B. mit Hilfe eines entsprechenden CAD-Systems. Eine Feinabstimmung lässt sich gegebenenfalls mit Hilfe eines Simulationsprogramms oder auch durch Versuche einfach ermitteln.

Der der Erfindung zugrunde liegende Gedanke der proaktiven Schrägstellung der Antriebsrollen-Drehachse kann darüber hinaus genutzt werden, den Rangierantrieb einschließlich der Befestigung an dem Chassis des Anhängers insgesamt elastischer zu gestalten. Auf diese Weise lässt sich der Einsatz von Material reduzieren, das ansonsten zur Erhöhung der Steifigkeit der Gesamtkonstruktion beim Stand der Technik notwendig ist. Die Materialersparnis führt zu einer Verminderung des Gewichts. Somit lässt sich gezielt ein Rangierantrieb mit erhöhter Elastizität der Teilkomponenten realisieren, ohne dass die technische Qualität beeinträchtigt wird, wobei erhebliche Gewichtseinsparungen erreicht werden können.

Bei einer Ausführungsform ist der Träger entlang einer Bewegungsrichtung zwischen der Ruheposition und der Antriebsposition hin und her bewegbar. Die Antriebsrollen-Drehachse kann schräg zu der Bewegungsrichtung stehen, wobei die Bewegungsrichtung ihrerseits senkrecht zu der Rad-Drehachse steht.

Bei einer Variante kann die Antriebsmotor-Drehachse des Antriebsmotors parallel mit einem Winkel von 0 Grad oder senkrecht mit einem Winkel von 90 Grad zu der Bewegungsrichtung stehen.

Bei einer anderen Variante kann die Antriebsmotor-Drehachse des Antriebsmotors in einem Winkel von größer 0 Grad und kleiner 90 Grad zu der Bewegungsrichtung stehen.

Wiederum bei einer anderen Ausführungsform kann die Bewegungsrichtung in einem Winkel von größer 0 Grad und kleiner 90 Grad zu der Rad-Drehachse stehen.

Schließlich ist auch eine Variante möglich, bei der die Antriebsrollen-Drehachse senkrecht oder in einem Winkel zu der Bewegungsrichtung steht.

Der Antriebsmotor kann zum Beispiel ein Universalmotor oder ein bürstenloser Elektromotor sein. Insbesondere ein bürstenloser Elektromotor mit Außenläufer (Außenläufermotor) kann zweckmäßig sein, weil er einen besonders kompakten Aufbau ermöglicht. Insbesondere die axiale Länge eines derartigen Außenläufermotors ist gering und erhöht somit die Kompaktheit.

Ein Außenläufermotor hat zudem den Vorteil, dass er ein höheres Drehmoment erzeugt als ein Innenläufermotor. Zudem kann aufgrund des erhöhten Drehmoments die Drehzahl des Motors reduziert werden, was sich vorteilhaft für die Auslegung der zwischen dem Antriebsmotor und der Antriebsrolle erforderlichen Getriebeeinrichtung, insbesondere für die Anforderung an die Übersetzungsverhältnisse auswirkt. Durch die Bauform eines Außenläufermotors können darüber hinaus das Bauvolumen und Gewicht spürbar reduziert werden.

Die Antriebsrolle kann z.B. eine Antriebsrolle sein, wie sie aus der EP 1 702 835 A1 bekannt ist.

Die Antriebsrolle kann über ihre axiale Erstreckung eine veränderliche Außenkontur aufweisen, derart, dass der Durchmesser der Antriebsrolle im Bereich ihrer axialen Mitte größer ist als an ihren axialen Rändern. Wenn die Antriebsrolle somit in der Mitte einen etwas größeren Durchmesser aufweist als an den Rändern, also z.B. eine bombierte oder bauchige Form aufweist, kann sie auf der Lauffläche des Anhängerrads etwas tiefer eindringen als an den Rändern. Da jedoch die Lauffläche des Anhängerrads prinzipbedingt weicher ist als die eher steiferen Flanken des Anhängerrads, kann auf diese Weise eine insgesamt gleichmäßige Anpressdruckverteilung zwischen Antriebsrolle und Anhängerrad erreicht werden.

Zudem erleichtert diese Form das Ändern der Winkelstellung der Antriebsrollen-Drehachse beim Andrücken der Antriebsrolle gegen das Rad des Anhängers, indem die bombierte Außenkontur der Antriebsrolle seitlich über die Lauffläche des Anhängerrads abwälzt.

Diese und weitere Vorteile und Merkmale der Erfindung werden nachfolgend anhand von Beispielen unter Zuhilfenahme der begleitenden Figuren näher erläutert. Es zeigen:
Fig. 1 eine Draufsicht eines Rangierantriebs;
Fig. 2 eine Draufsicht eines Rangierantriebs gemäß einer anderen Ausführungsform;
Fig. 3 eine Draufsicht eines Rangierantriebs gemäß einer weiteren Variante; und
Fig. 4 ein Rangiersystem in Ruheposition (Fig. 4a) und in Antriebsposition (Fig. 4b).

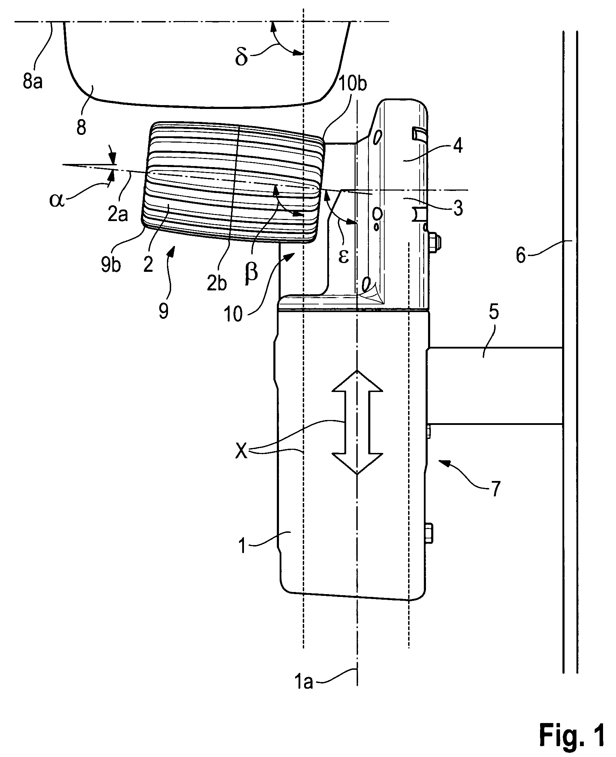

Figur 1 zeigt eine Draufsicht auf einen Rangierantrieb mit einem unter einer Abdeckung verborgenen Antriebsmotor 1 und einer von dem Antriebsmotor 1 drehend antreibbaren Antriebsrolle 2.

Der Antriebsmotor 1 und die Antriebsrolle 2 sind von einem Träger 3 gehalten, wobei die Antriebsrolle 2 an dem Träger 3 einseitig gelagert ist. Selbstverständlich ist auch eine zweiseitige bzw. beidseitige Lagerung der Antriebsrolle 2 an dem Träger 3 möglich. Der Träger 3 ist teilweise als Getriebegehäuse ausgebildet, so dass in seinem Inneren auch eine Getriebeeinrichtung 4 angeordnet ist, die dazu dient, die verhältnismäßig hohe Drehzahl des Antriebsmotors 1 in eine niedrigere Drehzahl für die Antriebsrolle 2 zu übersetzen.

Die Getriebeeinrichtung 4 ist in Fig. 1 nur von außen dargestellt. Insbesondere kann die Getriebeeinrichtung 4 mehrere Stufen aufweisen, um das gewünschte gesamte Übersetzungsverhältnis zu erreichen.

Der Träger 3 wird von einer Befestigungseinrichtung 5 gehalten, die ihrerseits an einem Fahrgestell 6 eines Anhängers angebracht werden kann, das in Fig. 1 in Form eines Chassis-Längsträgers nur schematisch dargestellt ist. Zum Beispiel kann die Befestigungseinrichtung 5 in Form eines Vierkantrohrs ausgeführt sein, das auf ein entsprechendes Querrohr (nicht dargestellt) aufgeschoben werden kann, wobei das Querrohr wiederum an der Unterseite des Anhängers in an sich bekannter Weise befestigt ist.

Die Befestigungseinrichtung 5 weist eine Halterung 7 auf, die den Träger 3 trägt. Der Träger 3 ist dann relativ zu der Halterung 7 durch eine Parallelverschiebung hin- und her bewegbar. Z.B. kann die Halterung 7 eine geeignete Linearführung aufweisen, um ein lineares Bewegen des Trägers 3 zu ermöglichen.

Der Träger 3 ist relativ zu der Befestigungseinrichtung 5 mit Hilfe einer nicht dargestellten Bewegungseinrichtung linear hin und her bewegbar. Auf diese Weise kann der Träger 3 zwischen einer Ruheposition, in der die Antriebsrolle 2 von einem Rad 8 des Anhängers getrennt ist - wie in Fig. 1 gezeigt - und einer Antriebsposition, in der die Antriebsrolle 2 gegen das Rad 8 des Anhängers gedrückt wird hin- und herbewegt werden. Die Bewegungseinrichtung kann z.B. einen Spindelantrieb aufweisen, um die Bewegung des Trägers 3 zu ermöglichen.

Der Träger 3 ist zusammen mit dem Antriebsmotor 1, der Antriebsrolle 2 und der Getriebeeinrichtung 4 entlang der Bewegungsrichtung X in einer geraden, gekrümmten oder kurvenförmigen Bahn hin- und her bewegbar, um zwischen der Ruheposition und der Antriebsposition verschoben werden zu können. Der entsprechende Bahnverlauf ergibt sich dabei aus der Betrachtungsperspektive.

In der in Fig. 1 gezeigten Ruheposition des Rangierantriebs erstrecken sich die Drehachse 2a der Antriebsrolle 2 und die Drehachse 8a des Anhängerrads 8 in einem Winkel α zueinander.

Die Drehachse 8a des Anhängerrads 8 ist in Figur 1 nicht maßstäblich eingezeichnet, da sie sich bei Berücksichtigung der realen Größe des Anhängerrads 8 außerhalb der Zeichnung befinden würde.

Während somit die Rad-Drehachse 8a rechtwinklig zu der Bewegungsrichtung X steht, steht die Antriebsrolle 2 mit ihrer Drehachse 2a in dem genannten Winkel α zur Drehachse 8a des Anhängerrads 8. Die Schrägstellung beträgt nur wenige Grad. Insbesondere kann α zwischen 1 Grad und 10 Grad liegen.

Beim Bewegen des Trägers 3 aus der in Figur 1 dargestellten Ruheposition in die Antriebsposition (vgl. Fig. 4b) wird die Antriebsrolle 2 gegen die Lauffläche des Anhängerrads 8 gedrückt. Aufgrund der Schrägstellung wirkt die Kraft zunächst auf einen äußeren Axialbereich 9 der Antriebsrolle 2, der horizontal von der Getriebeeinrichtung 4 und der Befestigungseinrichtung 5 weiter entfernt liegt, als ein innerer Axialbereich 10 der Antriebsrolle 2.

Beim weiteren Zustellen des Trägers 3 wird die auf die Antriebsrolle 2 wirkende Kraft immer größer, so dass nachfolgend die Toleranzen in den Lagern und Führungen ausgeglichen werden, das heißt auf Block setzen. Zu den Lagerungen gehört insbesondere die drehbare Lagerung der Antriebsrolle 2 am Träger 3. Als Führung ist die Linearführung zwischen der Halterung 7 und dem Träger 3 zu nennen.

Weiterhin sind die wirkenden Kräfte derart groß, dass sich auch elastische Verformungen ergeben. Insbesondere kann sich die auskragende Befestigungseinrichtung 5 verbiegen.

Aufgrund dieser Ausgleichsbewegungen und -verformungen ändert sich die Winkelstellung der Antriebsrollen-Drehachse 2a zur Drehachse 8a, so dass die Antriebsrollen-Drehachse 2a zunehmend parallel zu der Rad-Drehachse 8a gestellt wird. Bei optimaler Auslegung der Winkelstellung (Winkel α) unter Berücksichtigung der wirkenden Kräfte, Toleranzen und Elastizitäten kann es erreicht werden, dass die Antriebsrolle 2 schließlich in der endgültigen Antriebsposition des Trägers 3 exakt parallel zu der Rad-Drehachse 8a steht.

Der Winkelausgleich der Antriebsrollen-Drehachse 2a kann auch dadurch unterstützt werden, dass die Antriebsrolle 2 eine geringfügig bombierte Form aufweist. Insbesondere kann die Antriebsrolle 2 im Bereich ihrer zwischen dem äußeren Axialbereich 9 und dem inneren Axialbereich 10 liegenden axialen Mitte 2b einen größeren Durchmesser aufweisen als an ihren axialen Rändern bzw. Enden 9b, 10b. Durch diese bombierte Form der Antriebsrolle 2 wird erreicht, dass der Druck in der Mitte der Lauffläche des Anhängerrads 8 etwas größer ist als an den steiferen Flanken des Rads 8. Dies führt zu einer Vergleichmäßigung des Anpressdrucks der Antriebsrolle 2 am Anhängerrad 8, so dass insgesamt das Drehmoment zuverlässiger übertragen werden kann. Zudem kann die Antriebsrolle 2 beim Bewegen in die Antriebsposition über die bombierte Außenform seitlich abwälzen.

Bei der in Figur 1 gezeigten Ausführungsform stehen die Motordrehachse 1 a und die Drehachse 2a zwar im Groben senkrecht, jedoch nicht mit 90 Grad zueinander, sondern genauer gesagt in einem Winkel von 90 Grad plus den Winkel α.

Ferner ist zwischen der Antriebsrollen-Drehachse 2a der Antriebsrolle 2 und der Bewegungsrichtung X ein Winkel β ausgebildet, welcher in Figur 1 90 Grad plus den Winkel α beträgt.

Die Motordrehachse 1 a steht unter einem Winkel γ zur Bewegungsrichtung X, wobei der Winkel γ in der gezeigten Ausführungsform 0 Grad ist.

Die Drehachse 8a des Anhängerrads 8 schließt mit der Bewegungsrichtung X einen Winkel δ ein, welcher in der Ausführungsform nach Figur 1 90 Grad beträgt.

Zudem ist die Antriebsrolle 2 mit ihrer Drehachse 2a derart zur Motordrehachse 1 a angeordnet, dass ein Winkel ε vorliegt, der in der gezeigten Ausführung 90 Grad plus den Winkel α groß ist.

Ebenso ist aber auch eine hier nicht gezeigte Ausführung möglich, bei der die Drehachsen 1 a, 2a des Antriebsmotors 1 und der Antriebsrolle 2 nahezu parallel (jedoch nicht genau parallel) zueinander, also mit dem Winkel ε zueinander stehen, der die Größe des Winkels α aufweist.

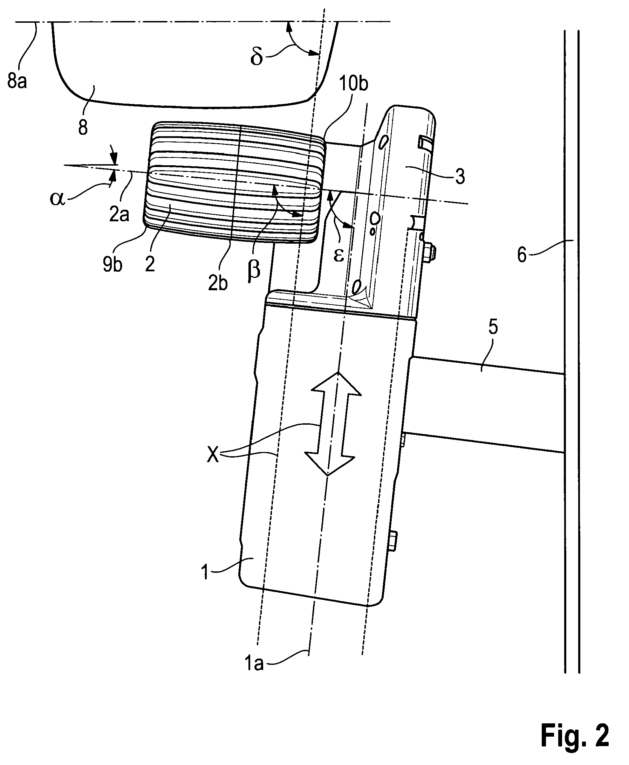

Figur 2 zeigt eine andere Ausführungsform des Rangierantriebs, der prinzipiell analog zu dem Rangierantrieb von Figur 1 aufgebaut ist.

Insbesondere steht die Drehachse 2a der Antriebsrolle 2 ebenfalls in einem Winkel α zu der Drehachse 8a des Anhängerrads 8.

Im Unterschied zu der Ausführungsform von Figur 1 ist jedoch die Drehachse 2a senkrecht zu der Bewegungsrichtung X des Trägers 3 angeordnet, wobei wiederum die Bewegungsrichtung X schräg zu der Hauptrichtung des Anhängers ausgerichtet ist, die z.B. durch den eingezeichneten Längsträger des Fahrgestells 6 vorgegeben ist. Die Bewegungsrichtung X steht somit in dem Winkel δ ungleich 90 Grad (nämlich 90 Grad +/- α) zu der Rad-Drehachse 8a.

Bei dieser Variante kann somit ein herkömmlicher Rangierantrieb verwendet werden, wie er z.B. aus der EP 1 714 858 A1 bekannt ist. Der Rangierantrieb ist allerdings mit Hilfe der Befestigungseinrichtung 5 mit einem geeigneten Winkel, der der Größe des Winkels α entspricht, an dem Anhänger zu montieren, um die gewünschte Schrägstellung zwischen der Antriebsrollen-Drehachse 2a und der Rad-Drehachse 8a zu erzielen.

Selbstverständlich ist auch eine Variante denkbar, die die Merkmale der Rangierantriebe der Figuren 1 und 2 kombiniert. Insbesondere kann auch bei der Variante von Figur 2 die Antriebsrollen-Drehachse 2a mit dem Winkel β, der ungleich 90 Grad ist, zu der Bewegungsrichtung X stehen, wenn dies zweckmäßig ist.

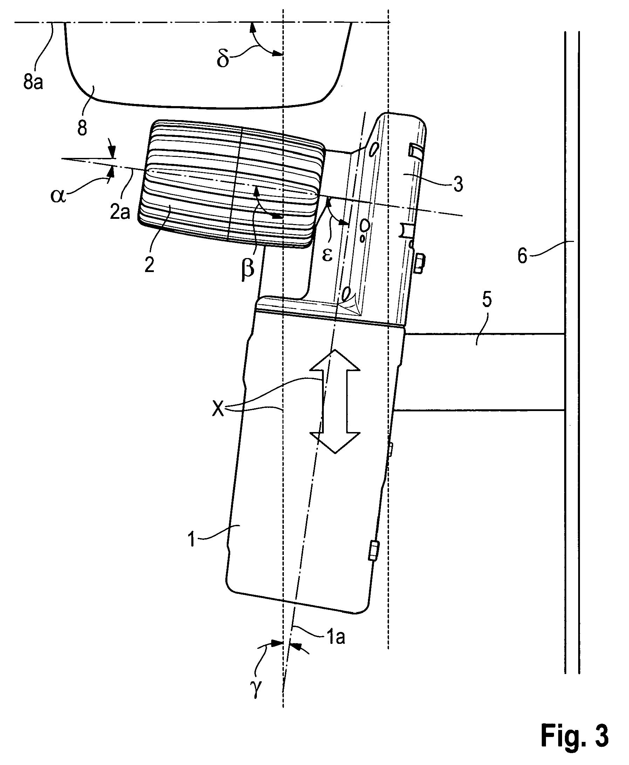

Figur 3 zeigt wiederum eine andere Variante, bei der der Rangierantrieb eine Antriebsrolle 2 aufweist, deren Drehachse 2a senkrecht zu der Motordrehachse 1 a steht, also ε gleich 90 Grad ist (wie bei Figur 2). Jedoch sind der Träger 3 bzw. die Halterung 7 derart ausgelegt, dass sich die Bewegungsrichtung X entlang der durch das Anhängerfahrgestell 6 vorgegebenen Hauptrichtung X erstreckt, wobei die Hauptrichtung X somit senkrecht zu der Rad-Drehachse 8a steht.

In dieser Ausführungsform ist der Winkel γ zwischen der Motordrehachse 1 a und der Bewegungsrichtung X ungleich 0 Grad, da er der Winkelgröße des Winkels α entspricht.

Allen Ausführungsformen gemeinsam ist es, dass die Antriebsrollen-Drehachse 2a in der Ruheposition des Trägers 3 nicht parallel, sondern mit dem Winkel α zu der Drehachse 8a des Anhängerrads 8 steht. Der Winkel α und die daraus resultierende geringfügige Winkelstellung können somit den Ausgleich von Toleranzen in den Lagern und Führungen im Lastzustand ermöglichen. Im Lastzustand, der in der Antriebsposition erreicht wird, ist dann die parallele Ausrichtung der Antriebsrollen-Drehachse 2a zu der Rad-Drehachse 8a und damit zu der Lauffläche des Anhängerrads 8 gewährleistet, so dass ein optimaler Schlupf zwischen der Mantelfläche der Antriebsrolle 2 und der Lauffläche des Anhängerrads 8 erreicht wird.

Die Schrägstellung der Antriebsrollen-Drehachse 2a ist in den Figuren zur Verdeutlichung übertrieben dargestellt. Je nach Präzision der Lagerungen und Steifigkeit des Rangierantriebs muss der Winkel α nur geringfügig über 0 Grad liegen. Schon ab 1 Grad können gute Ergebnisse erzielt werden.

## Patentansprüche

1. Rangierantrieb für einen Anhänger, mit
- einer Befestigungseinrichtung (5) zum Befestigen an dem Anhänger;
- einem relativ zu der Befestigungseinrichtung (5) bewegbaren Träger (3);
- einem von dem Träger (3) gehaltenen Antriebsmotor (1); und mit
- einer von dem Antriebsmotor (1) drehend antreibbaren und von dem Träger (3) gehaltenen Antriebsrolle (2); wobei
- der Träger (3) entlang einer Bewegungsrichtung linear hin und her bewegbar ist, zwischen einer Ruheposition, in der die Antriebsrolle (2) von einem Rad (8) des Anhängers getrennt ist, und einer Antriebsposition, in der die Antriebsrolle (2) gegen das Rad (8) des Anhängers gedrückt wird; und wobei
- die Winkelstellung der Antriebsrollen-Drehachse (2a) beim Erreichen der Antriebsposition während des Andrückens der Antriebsrolle (2) gegen das Rad (8) des Anhängers aufgrund von Elastizitäten und/oder Toleranzen änderbar ist;
**dadurch gekennzeichnet, dass**
- in der Ruheposition die Antriebsrollen-Drehachse (2a) der Antriebsrolle (2) in einem Winkel (α) ungleich 0 Grad zu der Rad-Drehachse (8a) des Rads (8) steht;
- die Elastizitäten durch elastische Verformungen innerhalb der Komponenten des Rangierantriebs bestimmt sind;
- der in der Ruheposition vorhandene Winkel (α) der Antriebsrollen-Drehachse (2a) derart gewählt ist, dass die Antriebsrollen-Drehachse (2a) in der Antriebsposition nach dem Vollziehen des Andrückens gegen das Rad (8) und dem Ausgleichen der elastischen Verformungen innerhalb der Komponenten des Rangierantriebs und Toleranzen parallel zu der Rad-Drehachse (8a) steht; und dass
- der Träger (3) wenigstens über einen Teil seines Bewegungswegs durch eine Parallelverschiebung zwischen der Ruheposition und der Antriebsposition bewegbar ist.

2. Rangierantrieb nach Anspruch 1, **dadurch gekennzeichnet, dass**
- die Antriebsrolle (2) eine axiale Erstreckung aufweist, mit einem äußeren Axialbereich (9), der von der Befestigungseinrichtung (5) horizontal weiter entfernt liegt als ein innerer Axialbereich (10) der Antriebsrolle (2); und dass
- in der Ruheposition der äußere Axialbereich (9) der Antriebsrolle (2) näher zu dem Rad (8) positioniert ist als der innere Axialbereich (10) der Antriebsrolle (2).

3. Rangierantrieb für einen Anhänger, mit
- einer Befestigungseinrichtung (5) zum Befestigen an dem Anhänger;
- einem relativ zu der Befestigungseinrichtung (5) bewegbaren Träger (3);
- einem von dem Träger (3) gehaltenen Antriebsmotor (1); und mit
- einer von dem Antriebsmotor (1) drehend antreibbaren und von dem Träger (3) gelagerten Antriebsrolle (2); wobei
- der Träger (3) entlang einer Bewegungsrichtung (X) linear hin und her bewegbar ist, zwischen einer Ruheposition, in der die Antriebsrolle (2) von einem Rad (8) des Anhängers getrennt ist, und einer Antriebsposition, in der die Antriebsrolle (2) gegen das Rad (8) des Anhängers gedrückt wird;
- in der Antriebsposition die Antriebsrollen-Drehachse (2a) der Antriebsrolle (2) senkrecht mit einem Winkel (β) von 90 Grad zu der Bewegungsrichtung (X) steht; und wobei
- die Antriebsrolle (2) eine axiale Erstreckung aufweist, mit einem äußeren Axialbereich (9), der von der Befestigungseinrichtung (5) horizontal weiter entfernt liegt als ein innerer Axialbereich (10) der Antriebsrolle (2);
**dadurch gekennzeichnet, dass**
- in der Ruheposition die Antriebsrollen-Drehachse (2a) der Antriebsrolle (2) in einem Winkel (β) ungleich 90 Grad zu der Bewegungsrichtung (X) steht;
- in der Ruheposition der äußere Axialbereich (9) der Antriebsrolle (2) an einer dem Rad zugewandten Vorderseite weiter nach vorne zum Rad vorsteht als der innere Axialbereich (10) der Antriebsrolle (2).

4. Rangierantrieb nach Anspruch 3, **dadurch gekennzeichnet, dass** der Träger (3) wenigstens über einen Teil seines Bewegungswegs durch eine Parallelverschiebung zwischen der Ruheposition und der Antriebsposition bewegbar ist.

5. Rangierantrieb nach einem der vorstehenden Ansprüche, **dadurch gekennzeichnet, dass** bei einem Bewegen des Trägers (3) aus der Ruheposition in die Antriebsposition die Winkelstellung der Antriebsrollen-Drehachse (2a) relativ zu der Rad-Drehachse (8a) so lange unveränderlich ist, so lange die Antriebsrolle (2) das Rad (8) des Anhängers noch nicht berührt.

6. Rangierantrieb nach einem der vorstehenden Ansprüche, **dadurch gekennzeichnet, dass** die Bewegung des Trägers (3) eine Bewegungskomponente in Horizontalrichtung und/oder eine Bewegungskomponente in Vertikalrichtung aufweist, wobei die jeweilige Bewegungskomponente geradlinig ist.

7. Rangierantrieb nach einem der vorstehenden Ansprüche, **dadurch gekennzeichnet, dass** in der Ruheposition der Winkel (α) zwischen der Antriebsrollen-Drehachse (2a) und der Rad-Drehachse (8a) zwischen 1 Grad und 10 Grad, insbesondere zwischen 1 Grad und 5 Grad, insbesondere zwischen 1 Grad und 3 Grad liegt.

8. Rangierantrieb nach einem der vorstehenden Ansprüche, **dadurch gekennzeichnet, dass**
- der Träger (3) entlang einer Bewegungsrichtung (X) zwischen der Ruheposition und der Antriebsposition hin und her bewegbar ist;
- die Antriebsrollen-Drehachse (2a) schräg zu der Bewegungsrichtung (X) steht; und dass
- die Bewegungsrichtung (X) senkrecht zu der Rad-Drehachse (8a) steht.

9. Rangierantrieb nach einem der vorstehenden Ansprüche, **dadurch gekennzeichnet, dass** die Antriebsmotor-Drehachse (1a) des Antriebsmotors (1) parallel oder senkrecht mit einem Winkel (γ) von 90 Grad zu der Bewegungsrichtung (X) steht.

10. Rangierantrieb nach einem der Ansprüche 1 bis 8, **dadurch gekennzeichnet, dass** die Antriebsmotor-Drehachse (1a) des Antriebsmotors (1) in einem Winkel (γ) von größer 0 Grad und kleiner 90 Grad zu der Bewegungsrichtung (X) steht.

11. Rangierantrieb nach einem der vorstehenden Ansprüche, **dadurch gekennzeichnet, dass** die Bewegungsrichtung (X) in einem Winkel (δ) von größer 0 Grad und kleiner 90 Grad zu der Rad-Drehachse (8a) steht.

12. Rangierantrieb nach einem der vorstehenden Ansprüche, **dadurch gekennzeichnet, dass** die Antriebsrollen-Drehachse (2a) senkrecht oder in einem Winkel (β) zu der Bewegungsrichtung (X) steht.

13. Rangierantrieb nach einem der vorangehenden Ansprüche, **dadurch gekennzeichnet, dass** die Antriebsrolle (2) eine über ihre axiale Erstreckung veränderliche Außenkontur aufweist, derart, dass der Durchmesser der Antriebsrolle (2) im Bereich ihrer axialen Mitte (2b) größer ist als an ihren axialen Rändern (9, 10).

## Claims

1. A maneuvering drive for a trailer, comprising
- a fastening means (5) for fastening to the trailer;
- a carrier (3) which can be moved relative to the fastening means (5);
- a drive motor (1) held by the carrier (3); and comprising
- a drive roller (2) which is adapted to be rotationally driven by the drive motor (1) and is held by the carrier (3);
- the carrier (3) being adapted to be linearly reciprocated along a direction of movement between a rest position, in which the drive roller (2) is spaced apart from a wheel (8) of the trailer, and a drive position, in which the drive roller (2) is pressed against the wheel (8) of the trailer; and
- the angular position of the drive roller axis of rotation (2a) being variable due to elasticities and/or tolerances while the drive roller (2) is pressed against the wheel (8) of the trailer upon reaching the drive position;
**characterized in that**
- in the rest position, the drive roller axis of rotation (2a) of the drive roller (2) is at a non-zero angle (α) to the wheel axis of rotation (8a) of the wheel (8);
- the elasticities are determined by elastic deformations within the components of the maneuvering drive;
- the angle (α), existing in the rest position, of the drive roller axis of rotation (2a) is selected such that in the drive position, the drive roller axis of rotation (2a) is parallel to the wheel axis of rotation (8a) upon performing the pressing against the wheel (8) and compensating the elastic deformations within the components of the maneuvering drive and tolerances; and **in that**
- the carrier (3) can be moved between the rest position and the drive position by a parallel displacement at least over part of its movement path.

2. The maneuvering drive according to claim 1, **characterized in that**
- the drive roller (2) has an axial extent, with an outer axial portion (9) which is further away horizontally from the fastening means (5) than an inner axial portion (10) of the drive roller (2); and **in that**
- in the rest position, the outer axial portion (9) of the drive roller (2) is positioned closer to the wheel (8) than the inner axial portion (10) of the drive roller (2).

3. A maneuvering drive for a trailer, comprising
- a fastening means (5) for fastening to the trailer;
- a carrier (3) which can be moved relative to the fastening means (5);
- a drive motor (1) held by the carrier (3); and comprising
- a drive roller (2) which is adapted to be rotationally driven by the drive motor (1) and is supported by the carrier (3);
- the carrier (3) being adapted to be linearly reciprocated along a direction of movement (X) between a rest position, in which the drive roller (2) is spaced apart from a wheel (8) of the trailer, and a drive position, in which the drive roller (2) is pressed against the wheel (8) of the trailer;
- in the drive position, the drive roller axis of rotation (2a) of the drive roller (2) being perpendicular to the direction of movement (X) at an angle (β) of 90 degrees; and
- the drive roller (2) having an axial extent, with an outer axial portion (9) which is further away horizontally from the fastening means (5) than an inner axial portion (10) of the drive roller (2);
**characterized in that**
- in the rest position, the drive roller axis of rotation (2a) of the drive roller (2) is at an angle (β) not equal to 90 degrees to the direction of movement (X);
- in the rest position, the outer axial portion (9) of the drive roller (2) projects further forward towards the wheel on a front side facing the wheel than the inner axial portion (10) of the drive roller (2).

4. The maneuvering drive according to claim 3, **characterized in that** the carrier (3) can be moved between the rest position and the drive position by a parallel displacement at least over part of its movement path.

5. The maneuvering drive according to any of the preceding claims, **characterized in that** when the carrier (3) is moved from the rest position to the drive position, the angular position of the drive roller axis of rotation (2a) relative to the wheel axis of rotation (8a) is invariable as long as the drive roller (2) does not yet contact the wheel (8) of the trailer.

6. The maneuvering drive according to any of the preceding claims, **characterized in that** the movement of the carrier (3) has a movement component in the horizontal direction and/or a movement component in the vertical direction, the respective movement component being straight-line.

7. The maneuvering drive according to any of the preceding claims, **characterized in that** in the rest position, the angle (α) between the drive roller axis of rotation (2a) and the wheel axis of rotation (8a) is between 1 degree and 10 degrees, in particular between 1 degree and 5 degrees, more particularly between 1 degree and 3 degrees.

8. The maneuvering drive according to any of the preceding claims, **characterized in that**
- the carrier (3) is adapted to be reciprocated between the rest position and the drive position along a direction of movement (X);
- the drive roller axis of rotation (2a) is oblique to the direction of movement (X); and **in that**
- the direction of movement (X) is perpendicular to the wheel axis of rotation (8a).

9. The maneuvering drive according to any of the preceding claims, **characterized in that** the drive motor axis of rotation (1a) of the drive motor (1) is parallel or perpendicular to the direction of movement (X) at an angle (γ) of 90 degrees.

10. The maneuvering drive according to any of claims 1 to 8, **characterized in that** the drive motor axis of rotation (1a) of the drive motor (1) is at an angle (γ) greater than 0 degrees and less than 90 degrees to the direction of movement (X).

11. The maneuvering drive according to any of the preceding claims, **characterized in that** the direction of movement (X) is at an angle (δ) greater than 0 degrees and less than 90 degrees to the wheel axis of rotation (8a).

12. The maneuvering drive according to any of the preceding claims, **characterized in that** the drive roller axis of rotation (2a) is perpendicular or at an angle (β) to the direction of movement (X).

13. The maneuvering drive according to any of the preceding claims, **characterized in that** the drive roller (2) has an outer contour that is variable over its axial extent, such that the diameter of the drive roller (2) in the region of its axial center (2b) is larger than on its axial edges (9, 10).

## Revendications

1. Entraînement de manoeuvre pour remorque, comportant
- un moyen de fixation (5) pour la fixation à la remorque,
- un support (3) mobile par rapport au moyen de fixation (5),
- un moteur d'entraînement (1) tenu par le support (3), et comportant
- un rouleau d'entraînement (2) qui est apte à être entraîné en rotation par le moteur d'entraînement (1) et qui est tenu par le support (3),
- le support (3) étant apte à être déplacé linéairement dans un mouvement de va-et-vient selon un sens de déplacement entre une position de repos dans laquelle le rouleau d'entraînement (2) est séparé d'une roue (8) de la remorque, et une position d'entraînement dans laquelle le rouleau d'entraînement (2) est poussé contre la roue (8) de la remorque, et
- la position angulaire de l'axe de rotation de rouleau d'entraînement (2a) étant variable en raison d'élasticités et/ou de tolérances lorsque la position d'entraînement est atteinte lors du serrage du rouleau d'entraînement (2) contre la roue (8) de la remorque,
**caractérisé en ce que**
- dans la position de repos, l'axe de rotation de rouleau d'entraînement (2a) du rouleau d'entraînement (2) présente un angle (α) différent de 0 degré par rapport à l'axe de rotation de roue (8a) de la roue (8),
- les élasticités sont déterminées par des déformations élastiques à l'intérieur des composants de l'entraînement de manoeuvre,
- l'angle (α) de l'axe de rotation de rouleau d'entraînement (2a) présent dans la position de repos est choisi de telle sorte que dans la position d'entraînement, l'axe de rotation de rouleau d'entraînement (2a) est parallèle à l'axe de rotation de roue (8a) après la réalisation du serrage contre la roue (8) et la compensation des déformations élastiques à l'intérieur des composants de l'entraînement de manoeuvre et des tolérances, et **en ce que**
- le support (3) est apte à être déplacé sur au moins une partie de son trajet de déplacement entre la position de repos et la position d'entraînement par une translation parallèle.

2. Entraînement de manoeuvre selon la revendication 1, **caractérisé en ce que**
- le rouleau d'entraînement (2) présente une extension axiale, avec une zone axiale extérieure (9) qui est horizontalement plus éloignée du moyen de fixation (5) qu'une zone axiale intérieure (10) du rouleau d'entraînement (2), et **en ce que**
- dans la position de repos, la zone axiale extérieure (9) du rouleau d'entraînement (2) est positionnée plus près de la roue (8) que la zone axiale intérieure (10) du rouleau d'entraînement (2).

3. Entraînement de manoeuvre pour remorque, comportant
- un moyen de fixation (5) pour la fixation à la remorque,
- un support (3) mobile par rapport au moyen de fixation (5),
- un moteur d'entraînement (1) porté par le support (3), et comportant
- un rouleau d'entraînement (2) qui est apte à être entraîné en rotation par le moteur d'entraînement (1) et qui est soutenu par le support (3),
- le support (3) étant apte à être déplacé linéairement dans un mouvement de va-et-vient selon un sens de déplacement (X) entre une position de repos dans laquelle le rouleau d'entraînement (2) est séparé d'une roue (8) de la remorque, et une position d'entraînement dans laquelle le rouleau d'entraînement (2) est poussé contre la roue (8) de la remorque,
- l'axe de rotation de rouleau d'entraînement (2a) du rouleau d'entraînement (2) étant perpendiculaire selon un angle (β) de 90 degrés par rapport au sens de déplacement (X) dans la position d'entraînement, et
- le rouleau d'entraînement (2) présentant une extension axiale, avec une zone axiale extérieure (9) qui est horizontalement plus éloignée du moyen de fixation (5) qu'une zone axiale intérieure (10) du rouleau d'entraînement (2),
**caractérisé en ce que**
- dans la position de repos, l'axe de rotation de rouleau d'entraînement (2a) du rouleau d'entraînement (2) est agencé selon un angle (β) différent de 90 degrés par rapport au sens de déplacement (X),
- dans la position de repos, la zone axiale extérieure (9) du rouleau d'entraînement (2), sur une face avant tournée vers la roue, est en saillie plus loin vers l'avant vers la roue que la zone axiale intérieure (10) du rouleau d'entraînement (2).

4. Entraînement de manoeuvre selon la revendication 3, **caractérisé en ce que** le support (3) est apte à être déplacé sur au moins une partie de son trajet de déplacement entre la position de repos et la position d'entraînement par une translation parallèle.

5. Entraînement de manoeuvre selon l'une des revendications précédentes, **caractérisé en ce que** lors d'un déplacement du support (3) hors de la position de repos dans la position d'entraînement, la position angulaire de l'axe de rotation de rouleau d'entraînement (2a) par rapport à l'axe de rotation de roue (8a) est invariable tant que le rouleau d'entraînement (2) ne touche pas encore la roue (8) de la remorque.

6. Entraînement de manoeuvre selon l'une des revendications précédentes, **caractérisé en ce que** le déplacement du support (3) comprend une composante de déplacement dans le sens horizontal et/ou une composante de déplacement dans le sens vertical, la composante de déplacement respective étant rectiligne.

7. Entraînement de manoeuvre selon l'une des revendications précédentes, **caractérisé en ce que** dans la positon de repos, l'angle (α) entre l'axe de rotation de rouleau d'entraînement (2a) et l'axe de rotation de roue (8a) est compris entre 1 degré et 10 degrés, en particulier entre 1 degré et 5 degrés, en particulier entre 1 degré et 3 degrés.

8. Entraînement de manoeuvre selon l'une des revendications précédentes, **caractérisé en ce que**
- le support (3) est apte à être déplacé dans un mouvement de va-et-vient selon un sens de déplacement (X) entre la position de repos et la position d'entraînement,
- l'axe de rotation de rouleau d'entraînement (2a) est incliné par rapport au sens de déplacement (X), et **en ce que**
- le sens de déplacement (X) est perpendiculaire à l'axe de rotation de roue (8a).

9. Entraînement de manoeuvre selon l'une des revendications précédentes, **caractérisé en ce que** l'axe de rotation de moteur d'entraînement (1a) du moteur d'entraînement (1) est parallèle ou perpendiculaire selon un angle (γ) de 90 degrés par rapport au sens de déplacement (X).

10. Entraînement de manoeuvre selon l'une des revendications 1 à 8, **caractérisé en ce que** l'axe de rotation de moteur d'entraînement (1a) du moteur d'entraînement (1) est agencé selon un angle (γ) supérieur à 0 degré et inférieur à 90 degrés par rapport au sens de déplacement (X).

11. Entraînement de manoeuvre selon l'une des revendications précédentes, **caractérisé en ce que** le sens de déplacement (X) est agencé selon un angle (δ) supérieur à 0 degré et inférieur à 90 degrés par rapport à l'axe de rotation de roue (8a).

12. Entraînement de manoeuvre selon l'une des revendications précédentes, **caractérisé en ce que** le l'axe de rotation de rouleau d'entraînement (2a) est perpendiculaire ou agencé selon un angle (β) par rapport au sens de déplacement (X).

13. Entraînement de manoeuvre selon l'une des revendications précédentes, **caractérisé en ce que** le rouleau d'entraînement (2) présente un contour extérieur variable sur son extension axiale, de telle sorte que le diamètre du rouleau d'entraînement (2) dans la zone de son centre axial (2b) est plus grand qu'au niveau de ses bords axiaux (9, 10).
